# EUROPÄISCHE PATENTSCHRIFT

(11) **EP 4 086 031 B1**
(45) Veröffentlichungstag und Bekanntmachung des Hinweises auf die Patenterteilung: **11.03.2026**
(21) Anmeldenummer: 21172185.7
(22) Anmeldetag: 05.05.2021
(51) Int. Cl.: B23K 35/02, B23K 35/26, C22C 13/02, B23K 35/36

(54) **LEGIERUNG**
ALLOY
ALLIAGE

(43) Veröffentlichungstag der Anmeldung: 09.11.2022
(73) Patentinhaber: Heraeus Electronics GmbH & Co. KG, 63450 Hanau (DE)
(72) Erfinder: PRENOSIL, Peter, 63450 Hanau (DE); FRITZSCHE, Sebastian, 63450 Hanau (DE); STENGER, Katja, 63450 Hanau (DE)
(74) Vertreter: Heraeus IP

(56) Entgegenhaltungen:
- EP-A1- 2 468 450
- WO-A1-2011/102034
- US-A- 5 980 822
- US-A1- 2019 210 161

## Beschreibung

Die Erfindung betrifft eine insbesondere als Lotlegierung verwendbare Legierung.

Aus WO 2004/096484 A2 ist eine Sechsstoff-Lotlegierung bekannt, die neben Zinn als Hauptbestandteil ≤10 Gew.-% (Gewichts-%) Silber, ≤10 Gew.-% Bismut, ≤10 Gew.-% Antimon, ≤3 Gew.-% Kupfer und ≤1 Gew.-% Nickel enthält. Neben einem ausgewogenen Eigenschaftsspektrum zeichnet sich die Sechsstoff-Lotlegierung insbesondere durch einen niedrigen Schmelzpunkt aus, ermöglicht aber zugleich die Herstellung von auch bei hohen Betriebstemperaturen stabilen Lötverbindungen.

Ausgehend von der aus WO 2004/096484 A2 bekannten Lotlegierung konnte die Anmelderin durch Austausch des Nickels gegen Germanium und Wahl eines niedrigen Silberanteils eine Legierung erhalten, welche bei der Verwendung als Lotlegierung überraschenderweise keine oder eine nur geringe Neigung zur Bildung unerwünschter sogenannter Blowholes beim Löten in Luftatmosphäre aufweist. Die Legierung zeichnet sich außerdem durch eine hohe Stabilität gegenüber Temperaturwechselbelastung aus. Bei den sogenannten Blowholes handelt es sich um kraterähnliche, offene Hohlräume im sichtbaren Bereich der Lötstelle. Die Bildung dieser Blowholes erfolgt während des Erstarrungsprozesses des zuvor geschmolzenen Lotmetalls. Eine geringe Neigung zur Bildung von Blowholes geht mit einer hohen Zuverlässigkeit einer Lötstelle einher. Die Patentdokumente EP 2 468 450 A1, WO 2011/102034 A1 und US 5 980 822 A offenbaren weitere Lötlegierungszusammensetzungen mit niedrigem Silbergehalt.

Gegenstand der Erfindung ist eine Sechsstoff-Legierung bestehend aus Zinn als Hauptbestandteil; 0,1 bis 2,0 Gew.%, bevorzugt 1,3 bis 1,7 Gew.-% Silber; 2,0 bis 4,0 Gew.-%, bevorzugt 2,5 bis 3,5 Gew.-% Bismut; 1,0 bis 2,0 Gew.%, bevorzugt 1,2 bis 1,8 Gew.-% Antimon; 0,1 bis 1,0 Gew.%, bevorzugt 0,5 bis 0,9 Gew.-% Kupfer; und 0,01 bis 1 Gew.-%, bevorzugt 0,02 bis 0,25 Gew.-% Germanium. Ganz besonders bevorzugt besteht diese Sechsstoff-Legierung aus Zinn als Hauptbestandteil; 1,3 bis 1,7 Gew.-% Silber; 2,5 bis 3,5 Gew.-% Bismut; 1,2 bis 1,8 Gew.-% Antimon; 0,5 bis 0,9 Gew.-% Kupfer; und 0,02 bis 0,25 Gew.-% Germanium. Die Sechsstoff-Legierung kann auch andere Elemente als Zinn, Silber, Bismut, Antimon, Kupfer und Germanium umfassen, die aufgrund technischer Gegebenheiten unbeabsichtigt in sie gelangt sein können, z.B. als Folge einer unbeabsichtigten, aber unvermeidlichen Einarbeitung bei der Herstellung. Mit anderen Worten, solche anderen Elemente können in der Sechsstoff-Legierung als unvermeidbare Verunreinigungen (z.B. Aluminium, Arsen, Blei, Cadmium, Cobalt, Eisen, Nickel, Phosphor, Schwefel, Zink) vorhanden sein, allerdings nur in sehr geringen Mengen von insgesamt > 0 bis 1000 Gew.-ppm (Gewichts-ppm). In jedem Fall werden solche unvermeidbaren Verunreinigungen nicht absichtlich der Sechsstoff-Legierung zugesetzt oder zugeführt.

Die Solidustemperatur der erfindungsgemäßen Legierung liegt im Bereich von beispielsweise 200 bis 235 °C, vorzugsweise 200 bis 225 °C.

Es hat sich gezeigt, dass die erfindungsgemäße Legierung als Lotmetall oder in Lotzusammensetzungen, insbesondere für den Einsatz im Bereich der Elektronik und Mikroelektronik, verwendet werden kann. Beim Löten in Luftatmosphäre weist die erfindungsgemäße Legierung eine nur geringe bis keine Neigung zur Bildung von Blowholes sowohl nach Anzahl als auch nach Größe auf und erfordert daher keine Verwendung von Schutzgas oder Inertgas während des Lötvorgangs. Die erfindungsgemäße Legierung zeichnet sich ferner durch eine ausgeprägte Temperaturwechselfestigkeit von > 1500 Temperaturwechselzyklen zwischen -40°C und +150°C aus.

Die erfindungsgemäße Legierung kann durch herkömmliche, dem Fachmann bekannte Verfahren hergestellt werden, z. B. durch Zusammenschmelzen der die erfindungsgemäße Legierung bildenden Elemente. Es ist dabei möglich, einen Induktionsofen zu verwenden und es kann unter Vakuum oder unter einer Schutzgasatmosphäre gearbeitet werden. Die verwendeten Materialien können einen Reinheitsgrad von z. B. ≥99,9 Gew.-% und mehr aufweisen. Die Schmelze wird typischerweise bei Raumtemperatur in eine Form gegossen, in der sie abkühlt und erstarrt.

Die erfindungsgemäße Legierung, insbesondere die Sechsstoff-Legierung kann direkt als solche als Lotmetall verwendet werden. Aus praktischer Sicht kann sie dabei für eine beabsichtigte Lötaufgabe zweckmäßig hergerichtet, d.h. in eine dafür geeignete Form gebracht werden. Beispiele für geeignete, entsprechend hergerichtete und jeweils von Flussmittel freie Formen umfassen Lotdrähte, Lotstäbe, Lotfolien, Lotpulver, Lotkugeln und Lotpreforms (Lotvorformen). Die erfindungsgemäße Legierung kann aber auch hergerichtet sein als Lotmetall in einer Flussmittel umfassenden Lotzusammensetzung, insbesondere als deren einziger Lotmetallbestandteil. Beispiele für solche Lotzusammensetzungen sind Flussmittel umfassende Lotpasten, Flussmittel umfassende Lotpreforms und Flussmittel umfassende Lotdrähte, insbesondere aber Flussmittel umfassende Lotpasten und Flussmittel umfassende Lotpreforms. Flussmittel dienen unter anderem dazu, die Oxidschicht auf den Oberflächen des Lotmetalls und der zu verlötenden Bauteile aufzulösen und so für eine bessere Benetzbarkeit beim Lötprozess zu sorgen. Gleiches gilt für Oxide, die während des Lötvorgangs durch den Sauerstoff der Luft entstehen. Flussmittel setzen außerdem die Grenzflächenspannung herab.

Eine eine erfindungsgemäße Legierung enthaltende Lotpaste kann beispielsweise 82 bis 92 Gew.-% einer erfindungsgemäßen Legierung in Form von Lotpulver oder Lotkugeln und 8 bis 18 Gew.-% eines Flussmittels umfassen oder daraus bestehen. Eine derartige Lotpaste kann hergestellt werden durch Mischen der Bestandteile des Flussmittels und Zugabe eines Lotpulvers aus einer erfindungsgemäßen Legierung. Die Zugabe des Lotpulvers erfolgt dabei vorzugsweise in mehreren Portionen unter Rühren zu einer vorgelegten Mischung der Flussmittelbestandteile, im Allgemeinen ohne Erwärmen.

Das Flussmittel unterliegt hinsichtlich seiner Zusammensetzung keinen besonderen Beschränkungen, und es kann daher ein übliches, dem Fachmann bekanntes Lötflussmittel verwendet werden. Üblicherweise können Flussmittel ein oder mehrere Basisharze (beispielsweise Kolophonium, Acrylharz), Aktivator (beispielsweise Halogenwasserstoffsäuresalz von Aminen, organische Carbonsäuren), Thixotropiermittel (beispielsweise hydriertes Rizinusöl, Bienenwachs, Carnaubawachs), sowie oftmals organisches Lösungsmittel umfassen.

In einer bevorzugten Ausführungsform kann das Flussmittel beispielsweise, jeweils bezogen auf sein Gesamtgewicht, i) 30 bis 60 Gew.-% mindestens eines sauren Harzes, ii) 5 bis 20 Gew.-% mindestens einer niedermolekularen Carbonsäure und iii) 0,4 bis 10 Gew.-% mindestens eines Amins umfassen.

Das mindestens eine saure Harz i) kann aus Kunstharzen mit sauren Gruppen wie insbesondere Carboxylgruppen ausgewählt sein. Bevorzugt sind hingegen Naturharze, die unmodifiziert oder chemisch modifiziert sein können. Bei den chemisch modifizierten Naturharzen kann es sich um beispielsweise um durch Hydrierung, Dimerisierung und/oder Veresterung ihrer Carboxylgruppen modifizierte Naturharze handeln. Insbesondere handelt es sich bei den Naturharzen selber um solche vom Kolophoniumharztyp.

Das mindestens eine saure Harz i) weist eine Gesamtsäurezahl beispielsweise im Bereich von 50 bis 300 mg KOH/g auf. Der hierin verwendete Ausdruck "Säurezahl" bezieht sich auf eine gemäß DIN EN ISO 2114 in mg KOH/g (Milligramm KOH pro Gramm) bestimmbare Säurezahl.

Die mindestens eine niedermolekulare Carbonsäure ii) kann bevorzugt aus Dicarbonsäuren ausgewählt sein. Beispiele umfassen Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure.

Beispiele für das mindestens eine Amin iii) umfassen N,N,N',N'-Tetramethylethylendiamin, N,N,N',N'-Tetraethylethylendiamin, N,N,N',N'-Tetrapropylethylendiamin, N-Coco-1,3-Diaminopropan, 1,6-Diaminohexan, 1,7-Diaminoheptan, 1,8-Diaminooktan, 1,9-Diaminononan und 1,10-Diaminodecan, Bis(2-ethylhexyl)amin, Bis(2-methylhexyl)amin, , Diethylamin, Triethylamin, Cyclohexylamin, Diethanolamin, Triethanolamin, hydriertes Talg-alkylamin, hydriertes (Talg-alkyl)dimethylamin und hydriertes Bis(talg-alkyl)methylamin.

Neben den Bestandteilen i), ii) und iii) kann das Flussmittel gemäß der bevorzugten Ausführungsform gegebenenfalls ein oder mehrere Verdickungsmittel umfassen, beispielsweise in einem Mengenanteil von insgesamt 1 bis 5 Gew. Beispiele umfassen Ethylcellulose, hydriertes Rizinusöl und modifiziertes oder unmodifiziertes Glycerin-tris-12-hydroxystearin.

Weiterhin kann das Flussmittel gemäß der bevorzugten Ausführungsform gegebenenfalls ein oder mehrere organische Lösemittel umfassen, beispielsweise in einem Mengenanteil von insgesamt 20 bis 46 Gew.-%. Beispiele umfassen bei 25 °C flüssige Diole, Alkohole, Etheralkohole und Ketone, insbesondere Trimethylpropanol, 1,2-Oktandiol, 1,8-Oktandiol, 2,5-Dimethyl-2,5-hexandiol, Isobornylcyclohexanol, Glykolether, 2-Ethyl-1,3-hexandiol, n-Decylalkohol, 2-Methyl-2,4-pentandiol, Terpineol und Isopropanol sowie Mischungen davon.

Beispiele für Glykolether umfassen Mono-, Di-, Tripropylenglykolmethylether, Mono-, Di-, Tripropylenglykol-n-butylether, Mono-, Di-, Triethylenglykol-n-butylether, Ethylenglykoldimethylether, Triethylenglykolmethylether, Diethylenglykoldibutylether, Tetraethylenglykoldimethylether und Diethylenglykolmonohexylether sowie Mischungen davon.

Weiterhin kann das Flussmittel gemäß der bevorzugten Ausführungsform gegebenenfalls ein oder mehrere halogenhaltige Verbindungen umfassen, beispielsweise in einem Mengenanteil von insgesamt 0,1 bis 3 Gew.-%. Beispiele umfassen Anilinhydrochlorid, Glutaminsäurehydrochlorid, Diethanolaminhydrochlorid, Diethanolaminhydrobromid, Triethanolaminhydrochlorid, Triethanolaminhydrobromid und trans-2,3-Dibrom-2-buten-1,4-diol.

Die erfindungsgemäße Legierung als Lotlegierung oder eine Lotzusammensetzung, die die erfindungsgemäße Legierung enthält, kann insbesondere in elektronischen oder mikroelektronischen Anwendungen eingesetzt werden. Beispiele für elektronische oder mikroelektronische Anwendungen sind die Befestigung und zugleich elektrische Verbindung von elektronischen Bauteilen mit Substraten durch Verlöten.

Beispiele für elektronische Bauteilen umfassen Dioden, LEDs (light emitting diodes, lichtemittierende Dioden), Dies, IGBTs (insulated-gate bipolar transistors, Bipolartransistoren mit isolierter Gate-Elektrode), MOSFETs (Metall-Oxid-Halbleiter-Feldeffekttransistoren), ICs (integrated circuits, integrierte Schaltungen), Sensoren, Kühlkörper, Widerstände, Kondensatoren, Spulen, Verbindungselemente (z. B. Clips), Bodenplatten und Antennen.

Beispiele für Substrate umfassen Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), und IMS (isoliertes Metallsubstrat).

Die erfindungsgemäße Legierung oder eine Lotzusammensetzung, die die erfindungsgemäße Legierung enthält, kann auch verwendet werden zur Herstellung sogenannter Lotdepots auf Substraten.

Die erfindungsgemäße Legierung kann nicht nur wie vorerwähnt Lotmetall sein, sondern sie kann beispielsweise auch die Metalllegierung einer Lötstelle oder eines Teils einer Lötstelle ausmachen. Eine solche Metalllegierung kann beispielsweise auch erst während oder nach Beendigung eines Lötvorgangs entstehen, beispielsweise durch Legierungsbildung aus mehr als einer Legierung und/oder unter Beteiligung von Metall aus metallischen Kontaktflächen von durch Verlöten miteinander verbundenen elektronischen Bauteilen bzw. Substraten.

Die erfindungsgemäße Legierung kann nicht nur wie vorerwähnt Lotmetall sein, sondern sie kann beispielsweise auch die Metalllegierung einer Lötstelle oder eines Teils einer Lötstelle ausmachen. Eine solche Metalllegierung kann beispielsweise auch erst während oder nach Beendigung eines Lötvorgangs entstehen, beispielsweise durch Legierungsbildung aus mehreren Komponenten, beispielsweise aus einzelnen Legierungselementen und/oder mehreren Legierungen, und/oder unter Beteiligung von Metall aus metallischen Kontaktflächen von durch Verlöten miteinander verbundenen elektronischen Bauteilen bzw. Substraten.

### Beispiele

### 1. Herstellung von Lotpasten und Lotpreforms

Zur Herstellung von Lotlegierungen wurden die verschiedenen Reinelemente (Reinheitsgrad von 3N) entsprechend der in Tabelle 1 aufgeführten Zusammensetzung (in Gew.-%) zerkleinert, eingewogen und gemeinsam in einem Induktionsofen unter Schutzgas aufgeschmolzen.

Zur Herstellung der in Tabelle 1 aufgeführten Lotpreforms wurden die gegossenen Lotlegierungen in einer Walze bis auf eine Enddicke von 75 µm herunter gewalzt. Aus diesen Blechen wurden dann mittels eines Lasers quadratische Lotpreforms mit einer Kantenlänge von 1,5 mm ausgeschnitten. Die Lotpreforms wurden anschließend in Ethanol mit Ultraschallunterstützung 20 Minuten gereinigt.

Zur Herstellung der in Tabelle 1 aufgeführten Lotpasten wurden die Lotlegierungen als Schmelze unter Inertgas verdüst. Die durch Verdüsung gebildeten Lotkugeln wurden in Flussmittel (Flussmittelzusammensetzung: 40 Gew.-% Kolophoniumharz (Säurezahl 240 mg/KOH), 40 Gew.-% Tripropylenglykol-n-butylether, 12 Gew.-% Sebacinsäure, 2 Gew.-% N,N,N',N'-Tetramethylethylendiamin, 2 Gew.-% N-Coco-1,3-diaminpropan, 4 Gew.-% hydriertes Rizinusöl) dispergiert. Der Anteil der Lotlegierung in der jeweiligen Lotpaste betrug jeweils 90 Gew.-%.

### 2. Bestimmung von Blowholes

Zur Bestimmung der Blowholes wurden Lotdepots der in Tabelle 1 aufgeführten Legierungen auf eine Kupferplatte aufgebracht.

Im Falle der Lotpreforms wurden diese ober- wie unterseitig mit jeweils einem Tropfen des vorgenannten Flussmittels benetzt und auf die Kupferplatte gesetzt.

Im Falle der Lotpasten wurden quadratische Lotdepots mit einer Kantenlänge von 1,5 mm mittels Schablonendruck unter Verwendung einer 120 µm dicken Schablone gedruckt.

Alle Lotdepots wurden unter Luftatmosphäre in einem Reflowprozess auf Kupferplatten gelötet. Hierzu wurde mit einer Heizrate von ca. 1K/s bis auf 250°C erhitzt und für 70 s dabei gehalten. Anschließend wurden die Proben abgekühlt und die Anzahl der entstandenen Blowholes unter einem Mikroskop gezählt. Die in Tabelle 1 aufgeführten Anzahlen von Blowholes stellen die Mittelwerte aus jeweils 9 Datenpunkten dar.

### 3. Bestimmung der Temperaturwechselbeständigkeit

Für die Bestimmung der Temperaturwechselbeständigkeit wurde die Scherkraft von Lotdepots an unbelasteten sowie an Temperaturwechsel-belasteten Proben gemessen. Hierzu wurden Lotdepots auf verzinnten Kontaktpads von Leiterplatten (FR4-Material) aufgebracht und anschließend mit R1206-Widerständen der Abmessungen 3,2 mm x 1,6 mm x 0,8 mm bestückt. Im Falle der Lotpreforms wurden die Lotdepots mit jeweils einem Tropfen des vorgenannten Flussmittels ober- wie unterseitig vor der Bestückung benetzt.

Im Falle der Lotpaste wurde diese mittels Schablonendruck mit einer quadratischen Abmessung von 1,5 mm Kantenlänge unter Nutzung einer 120 µm dicken Schablone auf die Kontaktpads aufgebracht.

Die Lötung erfolgte unter Verwendung des vorgenannten Reflowprofils.

Nach der Lötung wurden die für die Temperaturwechselbelastung vorgesehenen Proben in einen Temperaturwechselschrank überführt und im 30-Minutentakt zwischen zwei Kammern zyklisiert; die erste Kammer war auf -40°C gekühlt, die zweite Kammer auf +150°C geheizt. Nach 1500 Zyklen wurden die Proben entnommen und die Qualität der Lötverbindung mittels Schertests beurteilt. Hierzu wurden die R1206-Widerstände mit einem Schermeissel (Breite 3 mm; Abstand des Schermeissels vom Substrat von 150 µm) bei einer Schergeschwindigkeit von 150 µm/s an der Längskante des Bauteils abgeschert und die dazu notwendige Kraft erfasst. Zur Bestimmung der Temperaturwechselbeständigkeit wurden die jeweiligen Scherkräfte nach Temperaturwechseltest ins Verhältnis zur Scherkraft eines baugleichen Elements ohne Temperaturwechselbelastung gesetzt. Die Werte dieser Scherkraftreduktion nach Temperaturwechselbelastung sind in Tabelle 1 als %-Werte angegeben.

**Tabelle 1: Übersicht über erfindungsgemäße Legierungen (1-16) und Vergleichslegierungen (R1-R13), sowie Ergebnisse hinsichtlich Scherkraftreduktion nach Temperaturwechselbelastung TWB (in %) und Anzahl gebildeter Blowholes.**

| Probe | Form | Sn | Ag | Cu | Bi | Sb | Ni | Ge | Scherkraftreduktion nach TWB | Blowholes |
|---|---|---|---|---|---|---|---|---|---|---|
| R1 | Preform | Rest | 3,8 | 0,7 | 3 | 1,5 | 0,15 | - | 43,5 | 81 |
| R2 | Preform | | 1 | 0,7 | 1 | 1 | - | 0,06 | 57,7 | 13 |
| R3 | Preform | | 1,5 | 0,7 | 1,5 | 3 | - | 0,25 | 63,7 | 3 |
| R4 | Preform | | 1,5 | 0,7 | 3 | 1,5 | 0,15 | 0,25 | 39,4 | 42 |
| R5 | Preform | | 1,5 | 0,03 | 3 | 1,5 | - | 0,03 | 36,6 | 133 |
| R6 | Preform | | 1,5 | 0,7 | 4,5 | 1,5 | - | 0,03 | 26,7 | 94 |
| R7 | Preform | | 1,5 | 0,7 | 3 | 0,7 | - | 0,03 | 40,9 | 82 |
| R8 | Preform | | 1,5 | 0,7 | 3 | 1,5 | - | 1,2 | 45,3 | 15 |
| R9 | Paste | | 3,8 | 0,7 | 3 | 1,5 | 0,15 | - | 42,4 | 69 |
| R10 | Paste | | 1,5 | 0,7 | 3 | 1,5 | 0,15 | 0,25 | 31,7 | 53 |
| R11 | Paste | | 1,5 | 0,7 | 3 | 1,5 | 0,25 | - | 40,7 | 77 |
| R12 | Paste | | 1,5 | 0,03 | 3 | 1,5 | - | 0,03 | 38,1 | 153 |
| R13 | Paste | | 1,5 | 0,7 | 4,5 | 1,5 | - | 0,03 | 24,9 | 98 |
| | | | | | | | | | | |
| 1 | Preform | Rest | 1,5 | 0,7 | 3 | 1,5 | - | 0,01 | 33,9 | 17 |
| 2 | Preform | | 1,5 | 0,7 | 3 | 1,5 | - | 0,03 | 36,2 | 25 |
| 3 | Preform | | 1,5 | 0,7 | 3 | 1,5 | - | 0,25 | 38,7 | 28 |
| 4 | Preform | | 0,3 | 0,7 | 3 | 1,5 | - | 0,03 | 36,5 | 27 |
| 5 | Preform | | 1,7 | 0,7 | 3 | 1,5 | - | 0,03 | 36,0 | 14 |
| 6 | Preform | | 1,5 | 0,3 | 3 | 1,5 | - | 0,03 | 36,8 | 35 |
| 7 | Preform | | 1,5 | 0,9 | 3 | 1,5 | - | 0,03 | 36,1 | 23 |
| 8 | Preform | | 1,5 | 0,7 | 2,5 | 1,5 | - | 0,03 | 42,0 | 20 |
| 9 | Preform | | 1,5 | 0,7 | 3,5 | 1,5 | - | 0,03 | 32,1 | 33 |
| 10 | Preform | | 1,5 | 0,7 | 3 | 1,2 | - | 0,03 | 38,4 | 22 |
| 11 | Preform | | 1,5 | 0,7 | 3 | 2 | - | 0,03 | 35,3 | 25 |
| 12 | Paste | | 1,5 | 0,7 | 3 | 1,5 | - | 0,01 | 31,6 | 20 |
| 13 | Paste | | 1,5 | 0,7 | 3 | 1,5 | - | 0,03 | 34,9 | 27 |
| 14 | Paste | | 1,5 | 0,7 | 3 | 1,5 | - | 0,25 | 36,5 | 31 |
| 15 | Paste | | 1,7 | 0,7 | 3 | 1,5 | - | 0,03 | 37,4 | 22 |
| 16 | Paste | | 1,5 | 0,7 | 2,5 | 1,5 | - | 0,03 | 39,2 | 23 |

## Patentansprüche

1. Sechsstoff-Legierung bestehend aus 90 bis 96,8 Gew.-% Zinn; 0,1 bis 2,0 Gew.% Silber; 2,0 bis 4,0 Gew.-% Bismut; 1,0 bis 2,0 Gew.% Antimon; 0,1 bis 1,0 Gew.% Kupfer; und 0,01 bis 1 Gew.-% Germanium, wobei die Sechsstoff-Legierung auch andere Elemente als Zinn, Silber, Bismut, Antimon, Kupfer und Germanium als unvermeidbare Verunreinigungen in sehr geringen Mengen von insgesamt > 0 bis 1000 Gew.-ppm umfassen kann.

2. Sechsstoff-Legierung bestehend aus 91,8 bis 94,5 Gew.-% Zinn; 1,3 bis 1,7 Gew.-% Silber; 2,5 bis 3,5 Gew.-% Bismut; 1,2 bis 1,8 Gew.-% Antimon; 0,5 bis 0,9 Gew.-% Kupfer; und 0,02 bis 0,25 Gew.-% Germanium, wobei die Sechsstoff-Legierung auch andere Elemente als Zinn, Silber, Bismut, Antimon, Kupfer und Germanium als unvermeidbare Verunreinigungen in sehr geringen Mengen von insgesamt > 0 bis 1000 Gew.-ppm umfassen kann.

3. Sechsstoff-Legierung nach Anspruch 1 oder 2 mit einer Solidustemperatur im Bereich von 200 bis 235 °C.

4. Sechsstoff-Legierung nach einem der vorhergehenden Ansprüche hergerichtet als jeweils von Flussmittel freies Lotprodukt ausgewählt aus der Gruppe bestehend aus Lotdrähten, Lotstäben, Lotfolien, Lotpulvern, Lotkugeln, Lotpreforms oder als jeweils Flussmittel umfassende Lotzusammensetzung ausgewählt aus der Gruppe bestehend aus Lotpasten, Flussmittel umfassenden Lotpreforms und Flussmittel umfassenden Lotdrähten.

5. Sechsstoff-Legierung hergerichtet als Lotpaste nach Anspruch 4 umfassend oder bestehend aus 82 bis 92 Gew.-% einer Sechsstoff-Legierung nach einem der Ansprüche 1 bis 3 in Form von Lotpulver oder Lotkugeln und 8 bis 18 Gew.-% eines Flussmittels.

6. Sechsstoff-Legierung hergerichtet als Lotpaste nach Anspruch 5, wobei das Flussmittel, jeweils bezogen auf sein Gesamtgewicht, i) 30 bis 60 Gew.-% mindestens eines sauren Harzes, ii) 5 bis 20 Gew.-% mindestens einer niedermolekularen Carbonsäure und iii) 0,4 bis 10 Gew.-% mindestens eines Amins umfasst.

7. Verwendung einer Sechsstoff-Legierung nach einem der Ansprüche 1 bis 6 in elektronischen oder mikroelektronischen Anwendungen oder zur Herstellung von Lotdepots auf Substraten.

## Claims

1. A six-component alloy consisting of 90 to 96.8 wt.% of tin; 0.1 to 2.0 wt.% of silver; 2.0 to 4.0 wt.% of bismuth; 1.0 to 2.0 wt.% of antimony; 0.1 to 1.0 wt.% of copper; and 0.01 to 1 wt.% of germanium, wherein the six-component alloy may also include elements other than tin, silver, bismuth, antimony, copper and germanium as unavoidable impurities in very small quantities totaling > 0 to 1000 wt.ppm.

2. A six-component alloy consisting of 91.8 to 94.5 wt.% of tin; 1.3 to 1.7 wt.% of silver; 2.5 to 3.5 wt.% of bismuth; 1.2 to 1.8 wt.% of antimony; 0.5 to 0.9 wt.% of copper; and 0.02 to 0.25 wt.% of germanium, wherein the six-component alloy may also include elements other than tin, silver, bismuth, antimony, copper and germanium as unavoidable impurities in very small quantities totaling > 0 to 1000 wt.ppm.

3. The six-component alloy according to claim 1 or 2 with a solidus temperature in the range of 200 to 235°C.

4. The six-component alloy according to any of the preceding claims, prepared in each case as a flux-free solder product selected from the group consisting of solder wires, solder rods, solder foils, solder powders, solder balls, solder preforms, or in each case as a flux-comprising solder composition selected from the group consisting of solder pastes, flux-comprising solder preforms, and flux-comprising solder wires.

5. The six-component alloy prepared as a solder paste according to claim 4, comprising or consisting of 82 to 92 wt.% of a six-component alloy according to any of claims 1 to 3 in the form of solder powder or solder balls and 8 to 18 wt.% of a flux.

6. The six-component alloy prepared as a solder paste according to claim 5, wherein the flux comprises, in each case based on its total weight, i) 30 to 60 wt.% of at least one acidic resin, ii) 5 to 20 wt.% of at least one low-molecular carboxylic acid and iii) 0.4 to 10 wt.% of at least one amine.

7. A use of a six-component alloy according to any of claims 1 to 6 in electronic or microelectronic applications or for the production of solder deposits on substrates.

## Revendications

1. Alliage à six composants constitué de 90 à 96,8 % en poids d'étain ; 0,1 à 2,0 % en poids d'argent ; 2,0 à 4,0 % en poids de bismuth ; 1,0 à 2,0 % en poids d'antimoine ; 0,1 à 1,0 % en poids de cuivre ; et 0,01 à 1 % en poids de germanium, dans lequel l'alliage à six composants peut également comprendre des éléments autres que l'étain, l'argent, le bismuth, l'antimoine, le cuivre et le germanium en tant qu'impuretés inévitables en très faibles quantités, > 0 à 1000 ppm en poids au total.

2. Alliage à six composants constitué de 91,8 à 94,5 % en poids d'étain ; 1,3 à 1,7 % en poids d'argent ; 2,5 à 3,5 % en poids de bismuth ; 1,2 à 1,8 % en poids d'antimoine ; 0,5 à 0,9 % en poids de cuivre ; et 0,02 à 0,25 % en poids de germanium, dans lequel l'alliage à six composants peut également comprendre des éléments autres que l'étain, l'argent, le bismuth, l'antimoine, le cuivre et le germanium en tant qu'impuretés inévitables en très faibles quantités, > 0 à 1000 ppm en poids au total.

3. Alliage à six composants selon la revendication 1 ou 2, avec une température de solidus dans la plage comprise allant de 200 à 235 °C.

4. Alliage à six composants selon l'une des revendications précédentes, préparé sous forme respective de produit de brasage exempt de flux, choisi dans le groupe constitué de fils de brasage, baguettes de brasage, feuilles de brasage, poudres de brasage, billes de brasage, préformes de brasage, ou sous forme respective de composition de brasage comprenant un flux, choisie dans le groupe constitué de pâtes de brasage, préformes de brasage comprenant un flux et fils de brasage comprenant un flux.

5. Alliage à six composants préparé sous forme de pâte de brasage selon la revendication 4 comprenant 82 à 92 % en poids d'un alliage à six composants selon l'une des revendications 1 à 3 sous forme de poudre de brasage ou de billes de brasage et 8 à 18 % en poids d'un flux, ou constitué de ceux-ci.

6. Alliage à six composants préparé sous forme de pâte de brasage selon la revendication 5, dans lequel le flux comprend, respectivement par rapport à son poids total, i) 30 à 60 % en poids d'au moins une résine acide, ii) 5 à 20 % en poids d'au moins un acide carboxylique de faible masse moléculaire et iii) 0,4 à 10 % en poids d'au moins une amine.

7. Utilisation d'un alliage à six composants selon l'une des revendications 1 à 6 dans des applications électroniques ou microélectroniques ou pour la réalisation de dépôts de brasage sur des substrats.
